# EUROPÄISCHE PATENTSCHRIFT

(11) **EP 3 149 365 B1**
(45) Veröffentlichungstag und Bekanntmachung des Hinweises auf die Patenterteilung: **11.12.2019**
(21) Anmeldenummer: 15725603.3
(22) Anmeldetag: 27.05.2015
(51) Int. Cl.: F16J 15/3296, B63H 23/32, F03B 13/26, F16J 15/00, F16J 15/16

(54) **DICHTUNGSVORRICHTUNG UND VERFAHREN ZUM ABDICHTEN IN EINEM FLÜSSIGEN MEDIUM**
SEALING DEVICE AND METHOD FOR SEALING IN A FLUID MEDIUM
DISPOSITIF DE SCELLEMENT ÉTANCHE ET PROCÉDÉ POUR SCELLER DE MANIÈRE ÉTANCHE DANS UN MILIEU LIQUIDE

(30) Priorität: 27.05.2014 DE 102014210129
(43) Veröffentlichungstag der Anmeldung: 05.04.2017
(73) Patentinhaber: Aktiebolaget SKF, 415 50 Göteborg (SE)
(72) Erfinder: BAUMANN, Michael, Westhill, Aberdeenshire AB32 6JR (GB); KOGLER, Christian, 8761 Oberkurzheim (AT); SWETE, Wolfgang, 8720 Knittelfeld (AT)
(74) Vertreter: Kuhstrebe, Jochen
(86) Internationale Anmeldenummer: PCT/EP2015/061646
(87) Internationale Veröffentlichungsnummer: WO 2015/181204

(56) Entgegenhaltungen:
- EP-A1- 0 631 112
- EP-A1- 1 223 359
- EP-A2- 1 203 960
- EP-A2- 2 272 750
- WO-A1-2007/124830
- WO-A1-2008/120399
- DE-A1- 10 314 923
- DE-A1-102011 016 185
- US-A- 5 562 406
- US-A- 5 643 026

## Beschreibung

Die vorliegende Erfindung liegt auf dem Gebiet des Abdichtens in einem flüssigen Medium.

In vielen Bereichen der Technik kommen Dichtungen zum Einsatz. Diese Dichtungen können beispielsweise einen Schutz eines mechanischen oder elektrischen Bauteils vor aggressiven Umgebungsmedien (beispielsweise korrosiven, ätzenden oder unter hohem Druck stehenden Stoffen) bieten. Die Dichtungen können unter diesen Umständen jedoch hohen Belastungen ausgesetzt sein, und dementsprechend schnell verschleißen. Auch kann eine Dichtung an einem beweglichen Bauteil, z.B. eine Wellendichtung, einer starken Beanspruchung ausgesetzt sein. Ferner können Wellendichtungen bei Unterwasseranwendungen zum Einsatz kommen, wo eine Wartung oder deren Ersatz in einigen Fällen aufwändig oder nur schwer möglich sein kann, wie beispielsweise bei Turbinen von Strömungs- oder Gezeitenkraftwerken. Solche Dichtungssysteme können möglicherweise hohe Produktions- oder Anschaffungskosten oder hohe Verschleißraten aufweisen, oder zu einem Zeitpunkt ausfallen, zu dem die Gefahr eines Schadens durch eindringendes Wasser nicht oder zumindest nur teilweise verhinderbar ist.

Konventionelle Lösungen umfassen beispielsweise kunststoffhaltige Dichtungssysteme für Anwendungen in geringer Wassertiefe, wie sie z.B. im Bereich des Schiffbaus eingesetzt werden. Solche Lösungen können jedoch in einigen Fällen eine zu geringe Lebensdauer aufweisen oder zu hohe Kosten, beispielsweise durch einen Aufwand an Fertigungsmaterialien oder einen komplexen Herstellungsprozess, verursachen.

Die Dokumente EP1223359 und US5643026 offenbarten konventionelle Anordnungen für Dichtungssysteme, in einem Unterwassergenerator bzw. einem Schiff. Das Dokument EP0631112 offenbart eine Dichtung mit einem integriertem Feuchtigkeitssensor.

Es ist daher wünschenswert, einen Kompromiss aus Wartungsaufwand, Zuverlässigkeit, Belastbarkeit und Fertigungskosten zu verbessern.

Diesen Anforderungen tragen eine Unterwasserturbine mit einer Dichtungsvorrichtung zum Abdichten in einem flüssigen Medium gemäß dem unabhängigen Patentanspruch 1 und ein Verfahren zum Betrieb einer Unterwasserturbine in einem Gezeitenkraftwerk gemäß dem unabhängigen Patentanspruch 8 Rechnung.

Gemäß einem ersten Aspekt beziehen sich Ausführungsbeispiele auf eine Unterwasserturbine mit einer Dichtungsvorrichtung zum Abdichten einer Welle der Unterwasserturbine gegen Meerwasser. Die Dichtungsvorrichtung umfasst eine erste Dichtungsanordnung, welche auf einer dem Medium zugewandten Primärseite angeordnet ist und ein ortsfestes Bauteil gegen ein drehbares Bauteil abdichtet. Die Dichtungsvorrichtung umfasst außerdem eine zweite Dichtungsanordnung, welche auf einer dem Medium abgewandten Sekundärseite angeordnet ist und das ortsfeste Bauteil gegen das drehbare Bauteil abdichtet. Die Dichtungsvorrichtung umfasst ferner einen Sensor, welcher an ein zwischen der ersten Dichtungsanordnung und der zweiten Dichtungsanordnung befindliches Volumen angebunden ist und dazu ausgebildet ist, eine Veränderung einer Feuchtigkeit zu messen. Das ortsfeste Bauteil weist ferner eine zwischen einer Kontaktfläche zu der ersten Dichtungsanordnung und einer Kontaktfläche zu der zweiten Dichtungsanordnung befindliche Bohrung auf. Dabei ist das Volumen durch die Bohrung mit einem Drucktank verbunden. Hierdurch kann eine Möglichkeit geschaffen werden, einen Verschleiß an der Dichtungsvorrichtung frühzeitig festzustellen, während eine dichtende Funktion weiterhin erhalten bleibt. Es kann somit ein Zeitpunkt für eine Wartung bereits vorzeitig festgelegt werden. Zudem kann unter Umständen ein verbesserter Schutz des Sensors vermittels der Dichtungsanordnungen erreicht werden. Zudem kann ein Entfernen eines bereits in das Volumen eingedrungenen Mediums wenigstens teilweise ermöglicht werden.

Bei manchen Ausführungsbeispielen umfasst die erste oder die zweite Dichtungsanordnung eine Lippendichtung. Die Lippendichtung weist dabei einen dem Medium zugewandten axial verlaufenden Einzug auf. Hierdurch kann bei Druckveränderungen des Mediums ein Durchdringen desselben auf eine dem Medium abgewandte Seite der Lippendichtung erschwert oder möglicherweise verhindert werden.

Bei einigen Ausführungsbeispielen umfasst die erste oder die zweite Dichtungsanordnung wenigstens eine zusätzliche Lippendichtung. Dabei weist die zusätzliche Lippendichtung einen dem Medium abgewandten axial verlaufenden Einzug auf. Es kann dadurch ein abgedichtetes Volumen zwischen der Lippendichtung und der zusätzlichen Lippendichtung geschaffen werden, was z.B. bei einer Befüllung mit einem Schmiermittel wünschenswert sein kann.

Bei manchen Ausführungsbeispielen umfasst die erste oder die zweite Dichtungsanordnung wenigstens eine weitere Lippendichtung. Dabei nimmt die weitere Lippendichtung eine das drehbare Bauteil radial umschließende Spiralfeder derart auf, dass eine Mittelachse der Spiralfeder einen kreisförmigen Verlauf mit einem größeren Radius als ein Verlauf einer Dichtfläche der weiteren Lippendichtung aufweist. Ein Anpressdruck der Dichtfläche auf das drehbare Bauteil kann somit erhöht, und damit unter Umständen ein Durchdringen von Stoffen in axialer Richtung und einer Gegenrichtung verhindert werden. So kann es z.B. möglich sein, ein Schmiermittel, welches in einem von dem drehbaren Bauteil und der ersten oder zweiten Dichtungsanordnung wenigstens teilweise begrenzten Volumen befindlich ist, an einem Austritt zu einer dem Medium zugewandten Seite der Dichtungsanordnung zu hindern.

Bei einigen Ausführungsbeispielen umfasst die erste Dichtungsanordnung ferner einen weiteren Sensor. Dabei ist der weitere Sensor zwischen der Lippendichtung und der weiteren Lippendichtung oder der zusätzlichen Lippendichtung angeordnet. Der weitere Sensor ist dazu ausgebildet, eine Veränderung einer Feuchtigkeit zu messen. Bei einem auftretenden Verschleiß an der ersten Dichtungsanordnung kann es somit möglich sein, ein sukzessives Durchdringen des Mediums durch die Lippendichtung mit Hilfe des weiteren Sensors und durch die weitere oder zusätzliche Lippendichtung mit Hilfe des Sensors festzustellen. Es kann dadurch ermöglicht werden, präzisere Information über einen Fortschritt des Verschleißes zu ermitteln.

Bei manchen Ausführungsbeispielen sind die Lippendichtung oder die weitere Lippendichtung drehfest mit dem ortsfesten Bauteil verbunden, und stehen in gleitendem Kontakt zu dem drehbaren Bauteil. Dadurch kann bei einigen Anwendungen eine Verschleißfläche reduziert werden.

Bei einigen Ausführungsbeispielen sind die Lippendichtung, die weitere Lippendichtung oder die zusätzliche Lippendichtung austauschbar mit dem ortsfesten oder dem drehbaren Bauteil verbunden. Ein Wartungsprozess kann so ggf. erleichtert werden, oder ungewollte Beschädigungen an Bauteilen bei einer Wartung vermieden werden. Auch kann dadurch bei Verschleiß lediglich eine betroffene Lippendichtung ausgetauscht, und möglicherweise ein Austausch weiterer Komponenten oder sogar der gesamten Dichtungsvorrichtung entfallen.

Bei manchen Ausführungsbeispielen ist das ortsfeste Bauteil ein Gehäuse, und das drehbare Bauteil eine Welle. Somit kann eine Anwendungsmöglichkeit für dauerhaft beanspruchte Bauteile, wie z.B. eine Welle, gegeben sein.

Bei einigen Ausführungsbeispielen umfasst die Dichtungsvorrichtung ferner einen Drucksensor. Der Drucksensor ist zwischen der Lippendichtung und der zusätzlichen oder weiteren Lippendichtung der ersten Dichtungsanordnung angeordnet, und dazu ausgebildet, eine Druckänderung in einem Volumen zwischen der Lippendichtung und der zusätzlichen oder weiteren Lippendichtung zu messen. Ein Eindringen größerer Leckagemengen des Mediums kann somit erleichtert festgestellt werden.

Bei manchen Ausführungsbeispielen umfasst die Dichtungsvorrichtung ferner einen Füllstandsmesser. Der Füllstandsmesser ist in dem Drucktank angeordnet, und dazu ausgebildet, eine in dem Drucktank befindliche Stoffmenge des Mediums zu messen. Hierdurch kann ein redundantes System geschaffen werden, um auch kleinere Leckagemengen zu erfassen.

Die Dichtungsvorrichtung umfasst eine erste Dichtungsanordnung, welche auf einer dem Meerwasser zugewandten Primärseite angeordnet ist und ein ortsfestes Bauteil gegen die Welle abdichtet. Die Dichtungsvorrichtung umfasst außerdem eine zweite Dichtungsanordnung, welche auf einer dem Meerwasser abgewandten Sekundärseite angeordnet ist und das ortsfeste Bauteil gegen die Welle abdichtet. Zudem umfasst die Dichtungsvorrichtung einen Sensor, welcher an ein zwischen der ersten Dichtungsanordnung und der zweiten Dichtungsanordnung befindliches Volumen angebunden ist und dazu ausgebildet ist, eine Veränderung einer Feuchtigkeit zu messen. Somit kann eine Anwendungsmöglichkeit bei einer erhöht Verschleiß erzeugenden Umgebung gegeben sein.

Manche Ausführungsbeispiele beziehen sich ferner auf ein Gezeitenkraftwerk mit einer Unterwasserturbine mit einer Dichtungsvorrichtung zum Abdichten einer Welle der Unterwasserturbine gegen Meerwasser. Somit kann eine Anwendungsmöglichkeit bei einem erhöhten oder stark wechselndem statischen oder dynamischen Druck des Mediums gegeben sein.

Gemäß einem weiteren Aspekt beziehen sich Ausführungsbeispiele auf ein Verfahren zum Betrieb einer Unterwasserturbine in einem Gezeitenkraftwerk mit einer Dichtungsvorrichtung zum Abdichten einer Welle der Unterwasserturbine gegen Meerwasser. Das Verfahren umfasst ein Abdichten eines ortsfesten Bauteils gegen ein drehbares Bauteil mittels einer ersten Dichtungsanordnung. Das Verfahren umfasst außerdem ein Abdichten eines ortsfesten Bauteils gegen ein drehbares Bauteil mittels einer zweiten Dichtungsanordnung. Das Verfahren umfasst weiterhin ein Messen einer Veränderung einer Feuchtigkeit zwischen der ersten und der zweiten Dichtungsanordnung. Das Verfahren umfasst ferner ein Erzeugen eines Messsignals, wenn die Veränderung eine Erhöhung um wenigstens einen vorbestimmten Schwellwert umfasst. Dies kann eine Nutzung von Messsignalen mit Informationen über einen Verschleiß, beispielsweise durch ein System zum Überwachen eines Betriebszustandes oder zum Beheben eines Wassereintritts ermöglichen.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben. Es zeigen im Einzelnen:
Fig. 1a eine Querschnittsansicht einer Dichtungsvorrichtung zum Abdichten in einem flüssigen Medium gemäß einem einfachen Ausführungsbeispiel;
Fig. 1b eine Querschnittsansicht einer Dichtungsvorrichtung zum Abdichten in einem flüssigen Medium gemäß einem detaillierten Ausführungsbeispiel;
Fig. 2 eine Querschnittsansicht einer Möglichkeit zur Anordnung eines Sensors an einer Lippendichtung;
Fig. 3 eine perspektivische Ansicht einer Möglichkeit zur Anordnung eines Sensors an einer Lippendichtung;
Fig. 4 ein Flussdiagramm eines Verfahrens zum Abdichten in einem flüssigen Medium gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

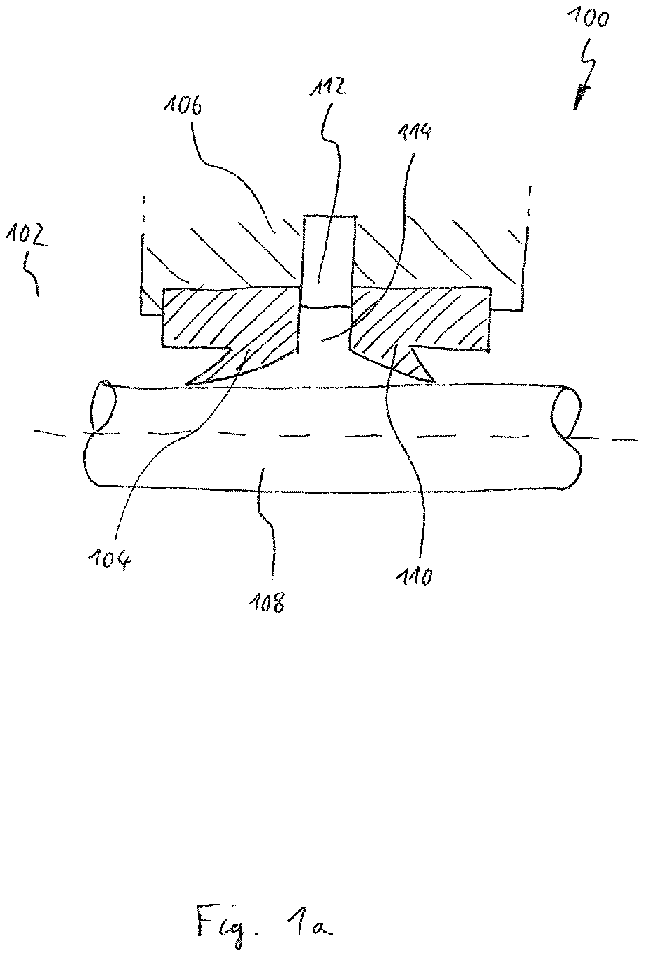

Fig. 1a zeigt eine Dichtungsvorrichtung 100 zum Abdichten in einem flüssigen Medium 102 gemäß einem einfachen Ausführungsbeispiel. Die Dichtungsvorrichtung 100 umfasst eine erste Dichtungsanordnung 104, welche auf einer dem Medium 102 zugewandten Primärseite angeordnet ist und ein ortsfestes Bauteil 106 gegen ein drehbares Bauteil 108 abdichtet. Die Dichtungsvorrichtung 100 umfasst außerdem eine zweite Dichtungsanordnung 110, welche auf einer dem Medium 102 abgewandten Sekundärseite angeordnet ist und das ortsfeste Bauteil 106 gegen das drehbare Bauteil 108 abdichtet. Die Dichtungsvorrichtung 100 umfasst ferner einen Sensor 112, welcher an ein zwischen der ersten Dichtungsanordnung 104 und der zweiten Dichtungsanordnung 110 befindliches Volumen 114 angebunden ist und dazu ausgebildet ist, eine Veränderung einer Feuchtigkeit zu messen. Hierdurch kann eine Möglichkeit geschaffen werden, einen Verschleiß an der Dichtungsvorrichtung 100 frühzeitig festzustellen, während eine dichtende Funktion weiterhin erhalten bleibt. Es kann somit ein Zeitpunkt für eine Wartung bereits vorzeitig festgelegt werden.

Der Begriff "Primärseite" bezeichnet eine dem Medium 102 zugewandte Seite. Der Begriff "Sekundärseite" bezeichnet eine dem Medium 102 abgewandte Seite. Beide Begriffe können in Relation zueinander, aber auch in Relation zu einer Komponente verwendet werden. Beispielsweise bezeichnet eine Primärseite der ersten Dichtungsanordnung 104 eine dem Medium 102 zugewandte Seite der ersten Dichtungsanordnung 104. Ferner können genannte Begriffe auch attributiv verwendet werden, also z.B. "primärseitig".

Die erste oder zweite Dichtungsanordnung 104; 110 kann einteilig oder mehrteilig gefertigt sein. Ferner können die erste oder zweite Dichtungsanordnung 104; 110 jeweils eine Lippendichtung sein oder aufweisen, oder auch jeweils mehrere Lippendichtungen aufweisen. Die erste oder zweite Dichtungsanordnung 104; 110 können aus einem Dichtungswerkstoff gefertigt sein. Ein Dichtungswerkstoff kann beispielsweise ein Kunststoff (z.B. Polyurethan, Nitrilkautschuk (NBR), Hydrierter Acrylnitrilbutadien-Kautschuk (HNBR)) sein, je nachdem, welche Art von Stoff am Ein- oder Ausdringen gehindert werden soll. Die Dichtung kann zumindest teilweise aus Metall, Metalllegierungen, besonders reibungsarmen Kunststoffen wie z. B. Polytetrafluorethylen (PTFE) oder Kunststoffen mit hoher Steifigkeit gefertigt sein. Kunststoffe hoher Steifigkeit können sogenannte Duroplaste sein. Zusätzlich kann die Dichtung zumindest teilweise aus gummiartigen Werkstoffen, bzw. aus Kunststoffen geringer Steifigkeit, gefertigt sein; dies können beispielsweise Elastomere oder einige Thermoplaste sein. Hierdurch kann eine Dichtwirkung erhöht und ein Verschleiß an dem drehbaren Bauteil 108 reduziert werden. Einige der genannten Stoffe können zudem Reibung vermindern oder im Vergleich zu konventionellen Stoffen eine höhere Beständigkeit in Salzwasser aufweisen.

Das flüssige Medium 102 kann beispielsweise Süßwasser, Salzwasser oder Brackwasser umfassen. Der Sensor 112 kann z.B. ein magnetoelastischer Resonanzsensor (MER-Sensor) sein, oder ein solchen Sensor umfassen, der dazu ausgebildet ist, eine in Folge einer Feuchtigkeitsänderung veränderte elektrische Leitfähigkeit einer Umgebung zu messen. Bei einem weiteren Ausführungsbeispiel ist der Sensor dazu ausgebildet, eine Viskosität, Beschleunigung, Vibration, Temperatur Stoffkonzentration oder einen Druck zu messen. Der Sensor kann z.B. form-, kraft- oder stoffschlüssig mit der ersten oder zweiten Dichtungsanordnung 104; 110 oder dem feststehenden Bauteil 106 verbunden sein, oder auch von einem Material der ersten oder zweiten Dichtungsanordnung 104; 110 wenigstens teilweise umschlossen sein. Das feststehende Bauteil 106 kann z.B. ein Gehäuse 106 sein. Das drehbare Bauteil 108 kann beispielsweise eine Achse oder eine Welle 108 sein. Die Welle 108 kann zudem an einer Kontaktfläche zu der ersten oder zweiten Dichtungsanordnung 104; 110 eine Beschichtung aufweisen, die einen geringeren Reibungskoeffizienten aufweist als ein Material, aus welchem die Welle 108 gefertigt ist. Die Beschichtung kann beispielsweise Teflon umfassen. Ferner kann die Welle wenigstens teilweise aus einem gehärteten Material gefertigt sein, z.B. in einem Bereich der Kontaktfläche. Hierdurch kann ein Verschleiß an der ersten oder zweiten Dichtungsanordnung 104; 110 oder der Welle 108 reduziert werden.

Das Medium 102 kann einen Druck aufweisen, der einen Gegendruck auf einer Sekundärseite der ersten Dichtungsanordnung 104 übersteigt. Der Druck kann dabei statisch oder dynamisch sein, und auch wechselnd starken Schwankungen unterliegen. Dadurch kann ein Verschleiß an der ersten Dichtungsanordnung 104 höher sein als an der zweiten Dichtungsanordnung 110. Verringert sich in Folge des Verschleißes eine dichtende Wirkung der ersten Dichtungsanordnung 104, kann das Medium in das Volumen 114 vordringen, wird jedoch vermittels der zweiten Dichtungsanordnung 110 an einem weiteren Vordringen gehindert. Der Sensor 112 erfasst dabei eine Zunahme der Feuchtigkeit in dem Volumen 114. Bei manchen Ausführungsbeispielen erzeugt der Sensor 112 ein Messsignal oder ein Warnsignal, wenn die Veränderung der Feuchtigkeit eine Erhöhung um wenigstens einen vorbestimmten Schwellwert umfasst. Hierdurch kann es ermöglicht werden, einen fortschreitenden Verschleiß der Dichtungsvorrichtung 100 zu erkennen, bevor das Medium 102 auf eine Sekundärseite der Dichtungsvorrichtung 100, oder genauer gesagt, der zweiten Dichtungsanordnung 110 durchdringt. So kann es ermöglicht werden, Schäden an sekundärseitig der Dichtungsvorrichtung 100 befindlichen Bauteilen, beispielsweise elektrischen oder elektronischen Komponenten zu vermeiden. Ein Verschleiß kann hierbei möglicherweise bei gleichzeitiger Erhaltung einer Dichtwirkung der Dichtungsvorrichtung 100 erkannt und behoben werden.

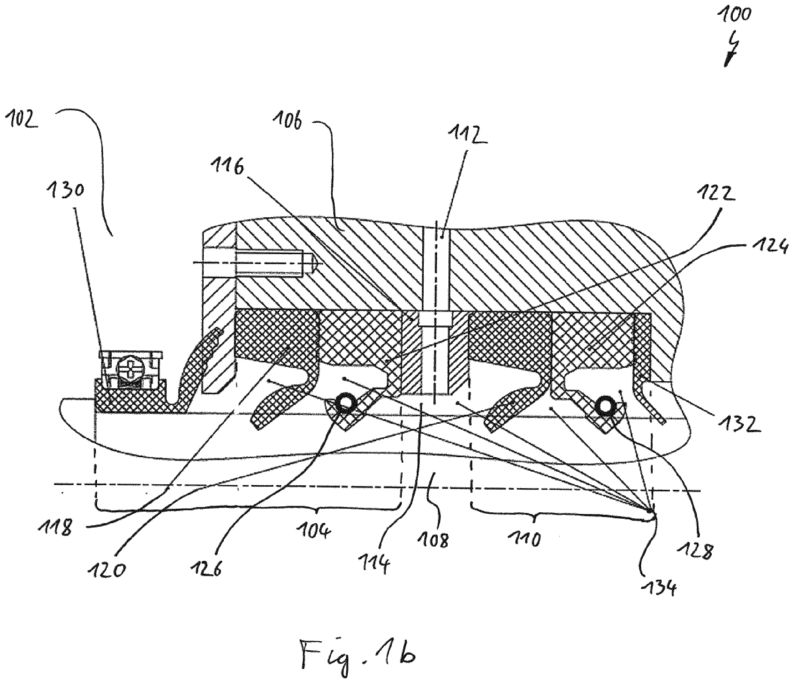

Ein weiteres, detailliertes Ausführungsbeispiel ist in Fig. 1b gezeigt. Komponenten, die eine Entsprechung in Fig. 1a besitzen, werden hierin mit gleichen Bezugszeichen bezeichnet. Selbige Komponenten sind im Nachfolgenden nicht nochmals erklärt, vielmehr wird lediglich auf die Unterschiede zu Fig. 1a eingegangen.

Zwischen die erste Dichtungsanordnung 104 und die zweite Dichtungsanordnung 110 ist ein Distanzstück 116 eingebracht, welches in axialer Richtung mit den Dichtungsanordnungen 104; 110 in Anlage steht. Ferner umfasst das Distanzstück 116 wenigstens eine Öffnung, welche beispielsweise der Aufnahme des Sensors 112 dient. Der Sensor 112 kann dabei, wie Fig. 1b zeigt, wenigstens teilweise in die Öffnung eingebracht sein. Auch kann der Sensor 112 wenigstens teilweise in eine weitere Öffnung an dem Gehäuse 106 eingebracht sein, die einen Verlauf der Öffnung bei dem Distanzstück 116 fortsetzt. Ferner kann der Sensor 112 durch die Öffnung oder die weitere Öffnung an das Volumen 114 angebunden sein.

Die erste Dichtungsanordnung 104 umfasst eine erste Lippendichtung 118. Die zweite Dichtungsanordnung 110 umfasst eine zweite Lippendichtung 120. Die erste und die zweite Lippendichtung 118; 120 weisen dabei einen dem Medium 102 zugewandten axial verlaufenden Einzug auf. Herrscht auf der Primärseite der Lippendichtung 118; 120 ein höherer Druck als sekundärseitig, kann ein Durchdringen eines primärseitigen Stoffes, z.B. des Mediums 102, auf die Sekundärseite erschwert oder möglicherweise verhindert werden. Ein primärseitiger Druck kann bei einigen Ausführungsbeispielen um bis zu 2, 5 oder 10 bar höher sein als ein sekundärseitiger Druck.

Die erste Dichtungsanordnung 104 umfasst ferner eine weitere Lippendichtung, die im Folgenden als erste federverstärkte Lippendichtung 122 bezeichnet wird. Die zweite Dichtungsanordnung 110 umfasst ferner eine weitere Lippendichtung, die im Folgenden als zweite federverstärkte Lippendichtung 122 bezeichnet wird. Dabei nimmt die erste federverstärkte Lippendichtung 122 eine das drehbare Bauteil radial umschließende erste Spiralfeder 126, und die zweite federverstärkte Lippendichtung 122 eine zweite Spiralfeder 128 derart auf, dass eine Mittelachse der ersten oder zweiten Spiralfeder 126; 128 einen kreisförmigen Verlauf mit einen größeren Radius als ein Verlauf einer Dichtfläche der ersten oder zweiten federverstärkten Lippendichtung 122; 124 aufweist. Ein Anpressdruck der Dichtfläche auf das drehbare Bauteil kann somit erhöht werden. Ein Durchdringen eines Stoffes kann damit sowohl von der Primär- auf die Sekundärseite als auch von der Sekundär- auf die Primärseite der ersten oder zweiten federverstärkten Lippendichtung 122; 124 erschwert oder verhindert werden. Dies kann wünschenswert sein, um beispielsweise das Medium 102 auf der Primärseite und gleichzeitig ein Schmiermittel auf der Sekundärseite zu halten. Ferner kann durch die erste oder zweite Spiralfeder 126; 128 eine konstante Kraftübertragung bewirkt, und dadurch ein durchgehender Kontakt zu der Welle 108 geschaffen werden. Somit können die erste oder zweite federverstärkten Lippendichtung 122; 124 möglicherweise sogar bei ungewolltem Verrutschen oder Fehlpositionierung eine Dichtwirkung, z.B. gegen primärseitig befindliches Wasser oder sekundärseitig befindliche Luft, aufrechterhalten.

Bei einigen Ausführungsbeispielen umfasst die erste oder die zweite Dichtungsanordnung 104; 110 wenigstens eine zusätzliche Lippendichtung. Beispielsweise umfasst in Fig. 1b die erste Dichtungsanordnung 104 eine vordere Lippendichtung 130, und die zweite Dichtungsanordnung 110 eine hintere Lippendichtung 132. Die vordere und die hintere Lippendichtung 130; 132 weisen dabei jeweils einen dem Medium abgewandten axial verlaufenden Einzug auf. Mit anderen Worten ist die vordere Lippendichtung 130 an der Welle 108 drehfest angebunden, und steht in gleitendem Kontakt mit dem Gehäuse 106. Durch die vordere Lippendichtung 130 kann somit eine Abdichtung gegen plötzlich auftretende Druckstöße oder gegen Verunreinigung durch Schmutzteilchen oder Schwebstoffe erreicht werden. Die hintere Lippendichtung 132 ist drehfest mit dem Gehäuse 106 verbunden und steht in gleitendem Kontakt mit der Welle 108. Die hintere Lippendichtung 132 kann beispielsweise primärseitig befindliches Schmiermittel an einem Austreten auf die Sekundärseite hindern oder auch bei einem möglichen Versagen der zweiten federverstärkten Lippendichtung 124 ein Verrutschen der zweiten Spiralfeder 128 in axialer Richtung erschweren. Ferner kann die hintere Lippendichtung 132 eine Dichtwirkung bei Auftreten von Druckstößen möglicherweise aufrechterhalten.

Es werden im Folgenden die vordere Lippendichtung 130, die erste Lippendichtung 118, die erste federverstärkte Lippendichtung 122, die zweite Lippendichtung 120, die zweite federverstärkte Lippendichtung 124 und die hintere Lippendichtung 132 unter dem Oberbegriff "Dichtungen" zusammengefasst. Ferner wird zwischen je zwei benachbarten Dichtungen in der soeben genannten Reihenfolge eine Mehrzahl von Volumina 134 gebildet, welche in Fig. 1b auch das Volumen 114 umfasst. Die Mehrzahl von Volumina 134 kann zusätzlich mit einem Schmiermittel befüllt werden.

Wirkt durch das Medium 102 ein dynamischer oder statischer Druck, kann die am weitesten primärseitig befindliche Dichtung (z.B. in Fig. 1b die vordere Lippendichtung 130) unter Umständen einer vergleichsweise stärkeren Belastung ausgesetzt sein als eine sekundärseitig gelegene Dichtung, und dadurch möglicherweise schneller verschleißen, was wiederum einen Verlust der Dichtwirkung bewirken kann. Bei Verlust der Dichtwirkung einer Dichtung kann die Belastung durch den Druck des Mediums 102 auf die sekundärseitig unmittelbar folgende Dichtung übertragen werden. In Fig. 1b erfährt in diesem Fall fortan die erste Lippendichtung 118 besagte Belastung. Mit anderen Worten können so ggf. ein verschleißbedingter Ausfall von Dichtungen und ein damit verbundenes Vordringen des Mediums 102 in sekundärseitiger Richtung lediglich schrittweise erfolgen. Eventuelle Schäden durch einen Austritt von z.B. Wasser auf der Sekundärseite der Dichtungsvorrichtung 100 können somit verzögert, und eine Wartung vor einem Entstehen von Schaden dadurch erheblich erleichtert werden. So kann unter Umständen z.B. ein Austauschen einer Dichtung zeitlich geplant werden. Ferner kann auch z.B. durch eine sekundärseitige Dichtung ein Durchdringen von Wasser weiterhin erschwert oder verhindert werden, während ein Austausch einer durch Verschleiß beschädigten primärseitigen Dichtung vorgenommen wird.

Ist ein Verschleiß an der vorderen Lippendichtung 130, der ersten Lippendichtung 118 und der ersten federverstärkten Lippendichtung 122 derart fortgeschritten, dass das Medium 102, z.B. Wasser, in das Volumen 114 eindringt, wird durch den Sensor eine Erhöhung der Feuchtigkeit oder ein stetiger Wasserzustrom gemessen. Der Sensor stellt bei einem Ausführungsbeispiel ein Signal, beispielsweise an einen Betreiber eines Gezeitenkraftwerks mit einer die Dichtungsvorrichtung 100 umfassenden Unterwasserturbine, bereit. Das Signal kann Information über eine erforderliche Wartung umfassen.

Die zuvor definierten Dichtungen können jeweils austauschbar mit dem Gehäuse 106 oder der Welle 108 verbunden sein. Dies bedeutet anders ausgedrückt mehrfach verbindbar oder entfernbar, wiederholt verbindbar oder entfernbar oder beschädigungsfrei verbindbar oder entfernbar. Eine Wartung kann somit erleichtert werden. Ferner kann hierdurch ein Durchsatz an Material reduziert werden, was eine Einsparung zusätzlicher Kosten bewirken kann.

Bei einigen Ausführungsbeispielen weist das Gehäuse 106 ferner eine zwischen einer Kontaktfläche zu der ersten Dichtungsanordnung 104 und einer Kontaktfläche zu der zweiten Dichtungsanordnung 110 befindliche Bohrung auf. Dabei ist das Volumen 114 durch die Bohrung mit einem Drucktank verbunden. Hierdurch kann ein Entfernen eines bereits in das Volumen eingedrungenen Mediums wenigstens teilweise ermöglicht werden. Mit anderen Worten kann hierdurch ein System zur Behebung einer Leckage (engl.: leakage recovery system) an das Volumen angebunden werden, welches anhand von zwei Ausführungsbeispielen im Folgenden näher erläutert wird.

Bei einem ersten Ausführungsbeispiel ist der Drucktank z.B. in einer Gondel einer Gezeitenturbine befindlich, der mit einer Druckluftquelle, z.B. einer Druckluftflasche, verbunden ist. Über ein Druckluftregelventil kann ein vordefinierter Druck im Tank und somit im Volumen 114 eingestellt werden. Im beispielhaften Falle einer Gondeltiefe von 30 m unter einer Wasseroberfläche, mit einem Außendruck des umgebenden Wassers von 3 bar, wird ein Idealwert des Druckes in dem Tank auf ebenfalls 3 bar vordefiniert, der an der Druckluftquelle eingestellt wird. Eindringendes Leckagewasser wird ebenfalls von dem Tank aufgenommen. Optional wird das Leckagewasser mit einem Pumpsystem bei einem Übersteigen eines vordefinierten Mindestdruckes z.B. zurück ins Meer gepumpt. Beispielsweise kann der Sensor 112 hierbei den Druck messen.

Bei einem zweiten Ausführungsbeispiel wird der Druck durch einen Außendruck von z.B. Seewasser in dem Dichtungssystem selbst aufgebracht, sodass eine Verwendung einer Druckluftquelle ggf. entfallen kann. Hierfür ist der Drucktank über eine Verbindung mit einem Wassertank oder einer Wasserleitung verbunden. Der Wassertank oder die Wasserleitung ist über eine weitere Verbindung ebenfalls mit dem Seewasser verbunden. Dabei kann beispielsweise die Dichtungsvorrichtung unter Wasser stehen oder umgebendes Wasser durch ein Druckregelventil von in dem Volumen 114 befindlicher Luft abgetrennt sein.

Bei weiteren Ausführungsbeispielen umfasst die erste Dichtungsanordnung 104 ferner wenigstens einen weiteren Sensor. Dabei ist der weitere Sensor zwischen der Lippendichtung 118 und der federverstärkten Lippendichtung 124 oder der vorderen Lippendichtung 130 angeordnet. Bei einem anderen Ausführungsbeispiel ist ein erster weiterer Sensor auf einer Primärseite der federverstärkten Lippendichtung 124 und ein zweiter weiterer Sensor auf einer Sekundärseite der federverstärkten Lippendichtung 124 angeordnet. Der weitere Sensor ist dazu ausgebildet, eine Veränderung einer Feuchtigkeit zu messen. Mit anderen Worten kann der weitere Sensor mit einem von der vorderen Lippendichtung 130 und der Lippendichtung 118 oder von der Lippendichtung 118 und der federverstärkten Lippendichtung 124 teilweise umschlossenes Volumen verbunden sein, und in diesem Volumen z.B. einen Wassereintritt messen. Der weitere Sensor kann, wenn die Veränderung der Feuchtigkeit einen vordefinierten Schwellwert überschreitet, ein Signal bereitstellen. Somit können Informationen an einen Betreiber über einen Fortschritt des Verschleißzustandes der Dichtungsvorrichtung 100 präzisiert werden. Es kann damit beispielsweise vorausberechnet werden, wann ein Durchdringen von Wasser auf die Sekundärseite der Dichtungsvorrichtung 100 voraussichtlich zu erwarten ist, und ggf. eine vorherige Wartung durchgeführt werden.

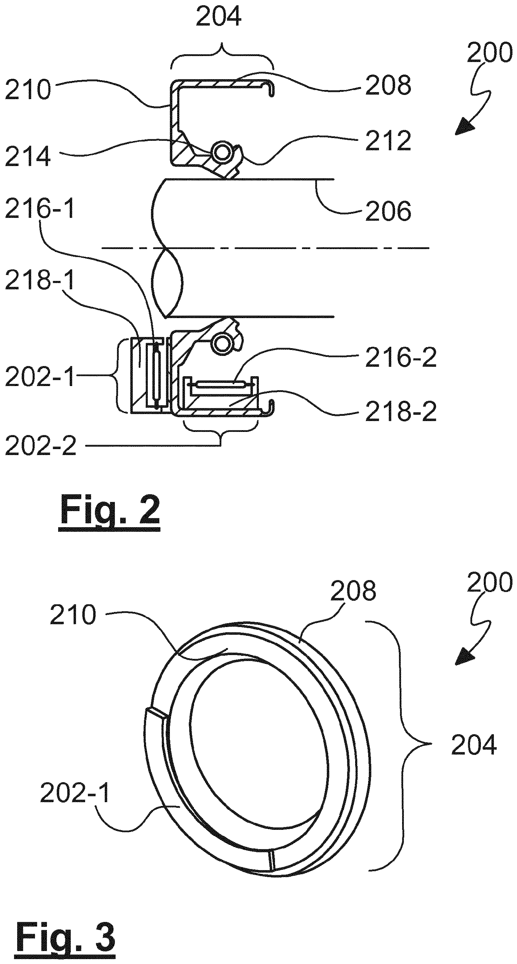

Fig. 2 und 3 zeigen eine Möglichkeit zur Anordnung eines weiteren Sensors 202-1; 202-2 an einer Dichtung 200 im Querschnitt (Fig. 2) und in perspektivischer Ansicht (Fig. 3). Durch den weiteren Sensor 202-1; 202-2 kann beispielsweise ein Eindringen des Mediums 102 (vgl. Fig. 1a), oder eine Eigenschaft einer Umgebung, z.B. Luft oder Schmiermittel, ermittelt werden. Eine von dem weiteren Sensor 202-1; 202-2 messbare Messgröße umfasst z.B. eine durch Feuchtigkeit veränderbare elektrische Größe, oder auch eine Temperatur, eine Viskosität, eine Stoffkonzentration, eine Beschleunigung oder Vibration oder einen Druck. Der weitere Sensor 202-1; 202-2 kann z.B. ein MER-Sensor 202-1; 202-2 sein, wie in Fig. 2 dargestellt. Ein magnetoelastischer Streifen 216-1; 216-2 des MER-Sensors 202-1; 202-2 kann dabei seine Abmessungen verändern, wenn er einem Magnetfeld ausgesetzt wird. Das Magnetfeld kann beispielsweise durch einen Elektromagneten oder auch durch einen permanenten Magneten 218-1; 218-2 erzeugt werden. Der Streifen 216-1; 216-2 kann also als magnetomechanischer Resonator wirken. Wird der Streifen 216-1; 216-2 einem kurzen magnetischen Impuls ausgesetzt, kann der Streifen 216-1; 216-2 dadurch in Schwingung versetzt werden. Eine Frequenz, Amplitude oder Dämpfung der Schwingung kann einen Rückschluss auf einen Zustand des Streifens 216-1; 216-2 erlauben, beispielsweise ob sich eine von einem Material des Streifens 216-1; 216-2 aufgenommene Feuchtigkeit verändert hat.

Die Dichtung 200 umfasst einen Dichtungsring 204, der in Fig. 2 in montiertem Zustand gezeigt ist und in gleitendem Kontakt zu einer Welle 206 steht. Der Dichtungsring weist eine sich axial und zylindrisch erstreckende Mantelfläche 208, eine sich radial erstreckende Stirnfläche 210 und eine den Kontakt zu der Welle 206 herstellende Lippe 212 auf. In die Lippe 212 ist eine Spiralfeder 214 derart eingebracht, wie bereits im Zusammenhang mit der ersten und zweiten federverstärkten Lippendichtung 122; 124 in Fig. 1b beschrieben. In Fig. 2 und 3 ist auf einer Seite des Dichtungsrings 204 ein MER-Sensor 202-1 an die Stirnfläche 210 angebracht. Auf einer Gegenseite des Dichtungsrings 204 ist ein MER-Sensor 202-2 derart an die Mantelfläche 208 angebracht, dass der MER-Sensor 202-2 der Welle 206 zugewandt ist. Bei einigen Ausführungsbeispielen ist der weitere Sensor 202-1; 202-2 form-, kraft- oder stoffschlüssig an den Dichtungsring 204 angebracht. Bei weiteren Ausführungsbeispielen ist der weitere Sensor 202-1; 202-2 von einem Material des Dichtungsrings wenigstens teilweise umschlossen. Es kann eine Messung einer Feuchtigkeitsveränderung auf der Primärseite des Dichtungsrings 204, und alternativ oder zusätzlich auf der Sekundärseite des Dichtungsrings 204 erfolgen. Darüber hinaus können der MER-Sensor 202-1 und der MER-Sensor 202-2 dazu ausgebildet sein, jeweils verschiedene Messgrößen zu messen. So kann z.B. der MER-Sensor 202-1 eine Veränderung der Feuchtigkeit, und der MER-Sensor 202-2 eine Temperatur oder Viskosität (z.B. eines Schmiermittels) messen.

Bei einigen Ausführungsbeispielen umfasst die Dichtungsvorrichtung ferner einen Drucksensor. Der Drucksensor kann beispielsweise zwischen der Lippendichtung und der zusätzlichen oder weiteren Lippendichtung der ersten Dichtungsanordnung angeordnet sein, und dazu ausgebildet sein, eine Druckänderung in einem Volumen zwischen der Lippendichtung und der zusätzlichen oder weiteren Lippendichtung zu messen. Ferner kann ein Füllstandsmesser von der Dichtungsvorrichtung umfasst sein. Der Füllstandsmesser kann beispielsweise in dem Drucktank angeordnet sein, und dazu ausgebildet sein eine in dem Drucktank befindliche Stoffmenge des Mediums zu messen. Somit kann es ermöglicht werden, ein mehrstufiges Warnsystem zum Erfassen von Leckagen zu schaffen.

Hierbei kann der Füllstandsmesser bei einem Eindringen des Mediums, z.B. Leckagewasser, als erste Warnstufe fungieren. Dieser kann im Vergleich zu dem Drucksensor kleinere Leackagemengen, beispielsweise im Milliliterbereich, detektieren, und bei Bedarf ein Warnsignal an einen Anlagenbetreiber bereitstellen.

Der Drucksensor kann beispielsweise direkt nach einer mit dem Medium in Kontakt stehenden Lippendichtung platziert werden, oder, mit anderen Worten, durch lediglich eine Lippendichtung von dem Medium getrennt sein. Der Drucksensor kann dabei Druckänderungen messen, welche bei Leckagewassermengen ab einer vordefinierten Mindestgrenze auftreten können.

Die vordefinierte Mindestgrenze kann dadurch definiert sein, dass eine entsprechende Leckagewassermenge in einem vorgegebenen Zwischenraum zwischen zwei Lippendichtungen erforderlich ist, um den Druck in diesem Zwischenraum messbar oder über eine vorgegebene Mindestzeitdauer zu verändern.

Dies kann eine Warnmöglichkeit zur verbesserten Detektion von Schäden oder Verschleißerscheinungen des Dichtungssystems bieten, die möglicherweise auf einen bevorstehenden Ausfall hinweisen. Dadurch kann ein Anlagenbetreiber auf eine gegebene Notwendigkeit hingewiesen werden, in diesem Falle das System auszutauschen. Bis zu einem tatsächlichen Austauschprozess kann eine oder mehrere Lippendichtungen der zweiten Dichtungsanordnung der Dichtungsvorrichtung eine weiterhin abdichtende Wirkung, und somit eine Notlaufeigenschaft bieten. Weiterhin kann der Drucksensor ein redundantes Überwachungssystem zum Füllstandsmesser darstellen.

Der Feuchtigkeitssensor kann ferner beispielsweise zwischen der Lippendichtung und der zusätzlichen oder weiteren Lippendichtung der ersten Dichtungsanordnung angeordnet sein. Der Feuchtigkeitssensor kann dabei einen Ausfall oder eine Flutung des dem Medium nächstgelegenen, durch Lippendichtungen abgegrenzten Volumens detektieren. Ebenfalls kann der Sensor ein redundantes Detektiersystem in Kombination mit dem Drucksensor und dem Füllstandsmesser darstellen.

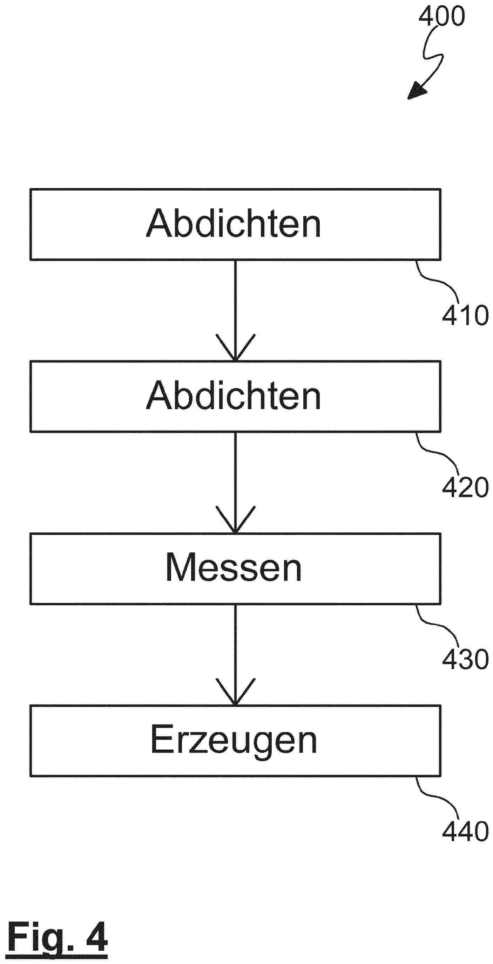

Fig. 4 zeigt ein Flussdiagramm zum Ablauf eines Verfahrens 400 zum Abdichten in einem flüssigen Medium. Das Verfahren 400 umfasst ein Abdichten 410 eines ortsfesten Bauteils gegen ein drehbares Bauteil mittels einer ersten Dichtungsanordnung. Das Verfahren 400 umfasst außerdem ein Abdichten 420 eines ortsfesten Bauteils gegen ein drehbares Bauteil mittels einer zweiten Dichtungsanordnung. Das Verfahren 400 umfasst weiterhin ein Messen 430 einer Veränderung einer Feuchtigkeit zwischen der ersten und der zweiten Dichtungsanordnung. Das Verfahren 400 umfasst ferner ein Erzeugen 440 eines Messsignals, wenn die Veränderung eine Erhöhung um wenigstens einen vorbestimmten Schwellwert umfasst. Dies kann eine Nutzung von Messsignalen mit Informationen über einen Verschleiß, beispielsweise durch ein System zum Überwachen eines Betriebszustandes oder zum Beheben eines Wassereintritts ermöglichen.

Ausführungsbeispiele können z.B. bei Unterwasseranwendungen zum Einsatz kommen, wie beispielsweise bei Turbinen in Gezeitenkraftwerken, und dort möglicherweise eine verbesserte Beständigkeit gegenüber Belastungen aufweisen als konventionelle Lösungen. Belastungen können Korrosion, z.B. durch Süß- oder Salzwasser, statischen Druck oder einen in einer vordefinierten Wassertiefe auftretenden dynamischen Druck (hervorgerufen durch kinetische Energie, z.B. Wellenbewegung, Sturm, Strömung) umfassen. Bei einigen Ausführungsbeispielen können von der ersten oder zweiten Dichtungsanordnung umfasste Lippendichtungen individuell auf ein Anwendungsgebiet oder eine Anforderung eines Benutzers oder Betreibers angepasst werden, was einen flexiblen Einsatz ermöglichen kann. Manche Ausführungsbeispiele können eine Reduktion erforderlichen Bauraums bewirken, durch Redundanz (z.B. mehrfach vorhandene Lippendichtungen oder Sensoren) einen Schutz gegen ein Eindringen eines Mediums erhöhen, eine frühzeitige Warnung bei Verschleiß ermöglichen, einen Wartungsprozess vereinfachen oder beschleunigen oder eine Einsparung von Kosten bewirken. Manche Ausführungsbeispiele können in flachem Wasser eingesetzt werden, oder mit anderen Worten, eine Dichtwirkung bei einem Druck von bis zu 3,5 bar, 5 bar oder 10 bar aufrechterhalten. Ferner können einige Ausführungsbeispiele, drahtlos oder drahtgebunden, mit einem Überwachungssystem zum Überwachen eines Betriebszustandes der Dichtungsvorrichtung verbunden sein.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 100: Dichtungsvorrichtung
- 102: Medium
- 104: Erste Dichtungsanordnung
- 106: Feststehendes Bauteil
- 108: Drehbares Bauteil
- 110: Zweite Dichtungsanordnung
- 112: Sensor
- 114: Volumen
- 116: Distanzstück
- 118: Lippendichtung
- 120: Lippendichtung
- 122: Weitere Lippendichtung
- 124: Weitere Lippendichtung
- 126: Spiralfeder
- 128: Spiralfeder
- 130: Zusätzliche Lippendichtung
- 132: Zusätzliche Lippendichtung
- 134: Mehrzahl von Volumina
- 200: Dichtung
- 202-1; 202-2: MER-Sensor
- 204: Dichtungsring
- 206: Welle
- 208: Mantelfläche
- 210: Stirnfläche
- 212: Lippe
- 214: Spiralfeder
- 216-1; 216-2: Magnetoelastischer Streifen
- 218-1; 218-2: Magnet
- 400: Verfahren
- 410: Abdichten
- 420: Abdichten
- 430: Messen
- 440: Erzeugen

## Patentansprüche

1. Unterwasserturbine mit einer Dichtungsvorrichtung (100) zum Abdichten einer Welle der Unterwasserturbine gegen Meerwasser,
wobei die Dichtungsvorrichtung (100) eine erste Dichtungsanordnung (104) umfasst, welche auf einer dem Meerwasser zugewandten Primärseite der Dichtungsvorrichtung (100) angeordnet ist und ein ortsfestes Bauteil (106) der Unterwasserturbine gegen die Welle abdichtet;
wobei die Dichtungsvorrichtung (100) eine zweite Dichtungsanordnung (110) umfasst, welche auf einer dem Meerwasser abgewandten Sekundärseite der Dichtungsvorrichtung (100) angeordnet ist
und das ortsfeste Bauteil (106) gegen die Welle abdichtet; und
wobei die Dichtungsvorrichtung (100) einen Sensor (112) umfasst, welcher an ein zwischen der ersten Dichtungsanordnung (104) und der zweiten Dichtungsanordnung (110) befindliches Volumen (114) angebunden ist und dazu ausgebildet ist, eine Veränderung einer Feuchtigkeit zu messen
wobei das ortsfeste Bauteil (106) ferner eine zwischen einer Kontaktfläche zu der ersten Dichtungsanordnung (104) und einer Kontaktfläche zu der zweiten Dichtungsanordnung (110) befindliche Bohrung aufweist, wobei das Volumen (114) durch die Bohrung mit einem Drucktank verbindbar ist.

2. Unterwasserturbine gemäß Anspruch 1, wobei die erste oder die zweite Dichtungsanordnung (104; 110) eine Lippendichtung (118; 120) umfasst, wobei die Lippendichtung (118; 120) einen dem Medium (102) zugewandten axial verlaufenden Einzug aufweist.

3. Unterwasserturbine gemäß einem der vorangegangenen Ansprüche, wobei die erste oder die zweite Dichtungsanordnung (104; 110) wenigstens eine zusätzliche Lippendichtung (130; 132) umfasst, wobei die zusätzliche Lippendichtung (130; 132) einen dem Medium (102) abgewandten axial verlaufenden Einzug aufweist.

4. Unterwasserturbine gemäß einem der vorangegangenen Ansprüche, wobei die erste oder die zweite Dichtungsanordnung (104; 110) wenigstens eine weitere Lippendichtung (122; 124) umfasst, wobei die weitere Lippendichtung (122; 124) eine das drehbare Bauteil (106) radial umschließende Spiralfeder (126; 128) derart aufnimmt, dass eine Mittelachse der Spiralfeder (126; 128) einen kreisförmigen Verlauf mit einen größeren Radius als ein Verlauf einer Dichtfläche der weiteren Lippendichtung (122; 124) aufweist.

5. Unterwasserturbine gemäß einem der Ansprüche 3 oder 4, wobei die erste Dichtungsanordnung (104) ferner einen weiteren Sensor (202-1; 202-2) umfasst, wobei der weitere Sensor (202-1; 202-2) zwischen der Lippendichtung (118) und der weiteren Lippendichtung (122) oder der zusätzlichen Lippendichtung (130) angeordnet ist, und wobei der weitere Sensor (202-1; 202-2) dazu ausgebildet ist, eine Veränderung einer Feuchtigkeit zu messen.

6. Unterwasserturbine gemäß einem der vorangegangenen Ansprüche, wobei die Lippendichtung (118; 120), die weitere Lippendichtung (122; 124) oder die zusätzliche Lippendichtung (130; 132) austauschbar mit dem ortsfesten oder dem drehbaren Bauteil (106; 108) verbunden sind.

7. Unterwasserturbine gemäß einem der vorangegangenen Ansprüche, wobei das ortsfeste Bauteil (106) ein Gehäuse, und das drehbare Bauteil (108) eine Welle ist.

8. Verfahren zum Betrieb einer Unterwasserturbine gemäß einem der vorangegangenen Ansprüche in einem Gezeitenkraftwerk mit einer Dichtungsvorrichtung (100) zum Abdichten einer Welle der Unterwasserturbine gegen Meerwasser, umfassend
abdichten eines ortsfesten Bauteils (106) gegen die Welle auf einer dem Meerwasser zugewandten Primärseite durch eine erste Dichtungsanordnung (104) der Dichtungsvorrichtung (100);
abdichten des ortsfesten Bauteil (106) gegen die Welle auf einer dem Meerwasser abgewandten Sekundärseite durch eine zweite Dichtungsanordnung (110) der Dichtungsvorrichtung (100),
messen einer Veränderung einer Feuchtigkeit durch einen von der Dichtungsvorrichtung (100) umfassten Sensor (112), welcher an ein zwischen der ersten Dichtungsanordnung (104) und der zweiten Dichtungsanordnung (110) befindliches Volumen (114) angebunden ist,
verbinden des Volumens (114) mit einem Drucktank durch eine zwischen einer Kontaktfläche zu der ersten Dichtungsanordnung (104) und einer Kontaktfläche zu der zweiten Dichtungsanordnung (110) befindliche Bohrung des ortsfesten Bauteils (106).

## Claims

1. Underwater turbine having a seal device (100) for sealing a shaft of the underwater turbine with respect to seawater,
wherein the seal device (100) comprises a first seal arrangement (104) which is arranged on a primary side, facing the seawater, of the seal device (100) and which seals a positionally fixed component (106) of the underwater turbine with respect to the shaft; wherein the seal device (100) comprises a second seal arrangement (110) which is arranged on a secondary side, facing away from the seawater, of the seal device (100) and which seals the positionally fixed component (106) with respect to the shaft; and
wherein the seal device (100) comprises a sensor (112) which is attached to a volume (114) situated between the first seal arrangement (104) and the second seal arrangement (110) and which is designed to measure a change in moisture,
wherein the positionally fixed component (106) furthermore has a bore which is situated between a contact surface with respect to the first seal arrangement (104) and a contact surface with respect to the second seal arrangement (110), wherein the volume (114) is able to be connected to a pressure tank by way of the bore.

2. Underwater turbine according to Claim 1, wherein the first or the second seal arrangement (104; 110) comprises a lip seal (118; 120), wherein the lip seal (118; 120) has an axially extending indentation which faces the medium (102).

3. Underwater turbine according to either of the preceding claims, wherein the first or the second seal arrangement (104; 110) comprises at least one additional lip seal (130; 132), wherein the additional lip seal (130; 132) has an axially extending indentation which faces away from the medium (102).

4. Underwater turbine according to one of the preceding claims, wherein the first or the second seal arrangement (104; 110) comprises at least one further lip seal (122; 124), wherein the further lip seal (122; 124) receives a helical spring (126; 128), which radially surrounds the rotatable component (106), such that a central axis of the helical spring (126; 128) has a circular profile with a larger radius than a profile of a sealing surface of the further lip seal (122; 124).

5. Underwater turbine according to either of Claims 3 and 4, wherein the first seal arrangement (104) furthermore comprises a further sensor (202-1, 202-2), wherein the further sensor (202-1, 202-2) is arranged between the lip seal (118) and the further lip seal (122) or the additional lip seal (130), and wherein the further sensor (202-1, 202-2) is designed to measure a change in moisture.

6. Underwater turbine according to one of the preceding claims, wherein the lip seal (118; 120), the further lip seal (122; 124) or the additional lip seal (130; 132) are exchangeably connected to the positionally fixed or the rotatable component (106; 108).

7. Underwater turbine according to one of the preceding claims, wherein the positionally fixed component (106) is a housing and the rotatable component (108) is a shaft.

8. Method for operating an underwater turbine according to one of the preceding claims in a tidal power plant, having a seal device (100) for sealing a shaft of the underwater turbine with respect to seawater, comprising
sealing a positionally fixed component (106) with respect to the shaft on a primary side facing the seawater by way of a first seal arrangement (104) of the seal device (100);
sealing the positionally fixed component (106) with respect to the shaft on a secondary side facing away from the seawater by way of a second seal arrangement (110) of the seal device (100),
measuring a change in moisture by way of a sensor (112) which the seal device (100) comprises and which is attached to a volume (114) situated between the first seal arrangement (104) and the second seal arrangement (110),
connecting the volume (114) to a pressure tank by way of a bore of the positionally fixed component (106), which bore is situated between a contact surface with respect to the first seal arrangement (104) and a contact surface with respect to the second seal arrangement (110).

## Revendications

1. Turbine sous-marine comprenant un dispositif d'étanchéité (100) destiné à étanchéifier un arbre de la turbine sous-marine par rapport à l'eau de mer,
le dispositif d'étanchéité (100) comprenant un premier ensemble d'étanchéité (104) qui est disposé sur un côté primaire du dispositif d'étanchéité (100) qui est dirigé vers l'eau de mer et qui étanchéifie un composant fixe (106) de la turbine sous-marine par rapport à l'arbre ;
le dispositif d'étanchéité (100) comprenant un deuxième ensemble d'étanchéité (110) qui est disposé sur un côté secondaire du dispositif d'étanchéité (100) qui est opposé à l'eau de mer et qui étanchéifie le composant fixe (106) par rapport à l'arbre ; et
le dispositif d'étanchéité (100) comprenant un capteur (112) qui est relié à un volume (114) situé entre le premier ensemble d'étanchéité (104) et le deuxième ensemble d'étanchéité (110) et qui est conçu pour mesurer une variation d'humidité,
le composant fixe (106) comprenant en outre un alésage situé entre une surface de contact avec le premier ensemble d'étanchéité (104) et une surface de contact avec le deuxième ensemble d'étanchéité (110), le volume (114) pouvant être relié, à travers l'alésage, à un réservoir sous pression.

2. Turbine sous-marine selon la revendication 1, le premier ou le deuxième ensemble d'étanchéité (104 ; 110) comprenant un joint à lèvre (118 ; 120), le joint à lèvre (118 ; 120) présentant une rétraction s'étendant axialement à l'opposé du milieu (102).

3. Turbine sous-marine selon l'une des revendications précédentes, le premier ou le deuxième ensemble d'étanchéité (104 ; 110) comportant au moins un joint à lèvre supplémentaire (130 ; 132), le joint à lèvre supplémentaire (130 ; 132) présentant un retrait s'étendant axialement à l'opposé du milieu (102).

4. Turbine sous-marine selon l'une des revendications précédentes, le premier ou le deuxième ensemble d'étanchéité (104 ; 110) comportant au moins un autre joint à lèvre (122 ; 124), l'autre joint à lèvre (122 ; 124) recevant un ressort en spirale (126 ; 128) qui enferme radialement le composant rotatif (106) de sorte que l'axe central du ressort en spirale (126 ; 128) a un profil circulaire dont le rayon est supérieur à celui du profil d'une surface d'étanchéité de l'autre joint à lèvre (122 ; 124).

5. Turbine sous-marine selon l'une des revendications 3 et 4, le premier ensemble d'étanchéité (104) comprenant en outre un autre capteur (202-1 ; 202-2), l'autre capteur (202-1 ; 202-2) étant disposé entre le joint à lèvre (118) et l'autre joint à lèvre (122) ou le joint à lèvre supplémentaire (130), et l'autre capteur (202-1 ; 202-2) étant conçu pour mesurer une variation d'humidité.

6. Turbine sous-marine selon l'une des revendications précédentes, le joint à lèvre (118 ; 120), l'autre joint à lèvre (122 ; 124) ou le joint à lèvre supplémentaire (130 ; 132) étant reliés de manière interchangeable au composant fixe ou rotatif (106 ; 108).

7. Turbine sous-marine selon l'une des revendications précédentes, le composant fixe (106) comprenant un boîtier et le composant rotatif (108) étant un arbre.

8. Procédé de fonctionnement d'une turbine sous-marine selon l'une des revendications précédentes située dans une centrale marémotrice et comprenant un dispositif d'étanchéité (100) destiné à étanchéifier un arbre de la turbine sous-marine par rapport à l'eau de mer, le procédé comprenant les étapes suivantes :
étanchéifier un composant fixe (106) par rapport à l'arbre, sur un côté primaire dirigé vers l'eau de mer,
à l'aide d'un premier ensemble d'étanchéité (104) du dispositif d'étanchéité (100) ;
étanchéifier le composant fixe (106) par rapport à l'arbre, sur un côté secondaire opposé à l'eau de mer, à l'aide d'un deuxième ensemble d'étanchéité (110) du dispositif d'étanchéité (100),
mesurer une variation d'humidité à l'aide d'un capteur (112) qui est entouré par le dispositif d'étanchéité (100) et qui est relié à un volume (114) situé entre le premier ensemble d'étanchéité (104) et le deuxième ensemble d'étanchéité (110),
relier le volume (114) à un réservoir sous pression à l'aide d'un alésage du composant fixe (106) qui est ménagé entre une surface de contact avec le premier ensemble d'étanchéité (104) et une surface de contact avec le deuxième ensemble d'étanchéité (110).
